# EUROPEAN PATENT SPECIFICATION

(11) **EP 3 517 285 B1**
(45) Date of publication and mention of the grant of the patent: **19.01.2022**
(21) Application number: 18169698.0
(22) Date of filing: 27.04.2018
(51) Int. Cl.: B29D 30/06

(54) **VACUUM CONTAINER FOR CURING TYRE**
VAKUUMBEHÄLTER ZUR HÄRTUNG EINES REIFENS
RÉSERVOIR À VIDE POUR LE DURCISSEMENT DE PNEUS

(30) Priority: 24.01.2018 KR 20180008953
(43) Date of publication of application: 31.07.2019
(73) Proprietor: Nexen Tire Corporation, Yangsan-si, Gyeongsangnam-do 50592 (KR)
(72) Inventor: Kang, Jun, Daegu 43016 (KR)
(74) Representative: Patentanwälte Ruff, Wilhelm, Beier, Dauster & Partner mbB

(56) References cited:
- EP-A1- 2 881 230
- EP-A2- 0 701 894
- WO-A1-2009/001386
- CN-A- 105 479 624
- CN-U- 203 697 498
- DE-A1- 2 253 596
- DE-A1-102007 043 715
- JP-A- H1 044 156
- US-A- 3 806 288

## Description

The invention relates to a vacuum container for curing a tyre.

Vehicles used by users are made of a large number of parts, and among them, a tyre substantially much affects the driving of a vehicle. In particular, the tyre may be said to be one of the core parts for securing user safety.

In particular, a logistics movement according to industrial development, an amount of transportation according to an increase in an individual workload, and automobile operations according to an increase in family activities have increased ever.

In a tyre manufacturing process, semi-finished products are manufactured by mixing a material having elasticity and flexibility with other materials, and then green tyres may be manufactured by molding the semi-finished products. Then, the green tyres are cured and then finished tyres are manufactured.

A curing process includes a process of applying a pressure to a green tyre for a certain time at a certain temperature. For example, a green tyre is placed in a mold and a pressure is applied to the inside of the green tyre toward the mold. Accordingly, a tyre corresponding to a mold shape or a surface shape of the mold may be manufactured. As a result, through the above processes, a desired pattern may be formed on a surface, for example, a tread, of a tyre.

Patent publication KR 10-1306043 discloses a vacuum container having internal vacuum for curing a green tyre, in which a vacuum state is maintained when the vacuum container is closed.

In this regard, to improve the quality of a tyre, air in the inside of a tyre is discharged to the outside when the inside of the vacuum curing container is hermetically sealed. When the vacuum process is performed in an unsealed state, a vent may be formed on a surface of a tyre tread.

Laid-open publication CN 105479624 A discloses a vacuum assisted venting active mold which comprises a bottom plate, an arcuate seat, a block, a middle sleeve, an upper cover, an upper seal ring, a middle seal ring, a plurality of additional seal rings, and a cavity. The block has a plurality of airflow passages at different heights leading out of the cavity to exhaust lines provided between the block and the arcuate seat. A lower sealing ring is mounted coaxially on the bottom plate and is provided with air suction holes communicating with the exhaust lines and configured for being connected to a vacuum pump.

Laid-open publication WO 2009/001386 A1 discloses a vacuum container for a tire curing mold, where this container is connected to a vacuum pump by an intake conduit located at a bottom plate of the container.

It is the technical problem underlying the invention to provide a vacuum container for curing a tyre, said vacuum container having advantageous improvements as compared to the prior art mentioned above, in particular concerning the disclosure of air from the inside of a tyre to the outside.

The invention solves this problem by providing a vacuum container having the features of claim 1.

The vacuum container of the invention is capable of effectively sealing its inside from the outside. The vacuum container of the invention can be made to have a simple structure to discharge air remaining inside the vacuum container to prevent formation of a vent in a tyre tread, and can be easily managed to have an extended life.

Advantageous embodiments of the invention are further specified in the dependent claims, the wording of which is herewith incorporated into the description by reference.

The upper plate may include an alignment recess formed at a position facing the outer ring, and a centering key provided in the alignment recess, wherein, when the outer ring moves downward, the centering key slidably contacts the outer ring, and an interval between the upper plate and the outer ring is maintained substantially constant such that positions of the upper plate and the outer ring are not misaligned by a repeated vertical movement of the outer ring with respect to the upper plate.

The upper discharge hole may include a protruding step formed at either side in an edge direction of the upper discharge hole such that the guide block is insertion-coupled to the upper discharge hole.

The vacuum container for curing a tyre may further include an upper sub-plate provided between the upper plate and the outer ring.

The outer ring and the upper sub-plate may be slidable in the vertical direction with respect to each other. The upper sub-plate may include a first sealing groove and a first sealing member placed in the first sealing groove. The first sealing member may slidably contact the outer ring to prevent the air from leaking through a gap between the outer ring and the upper sub-plate.

The upper plate may include a second sealing groove and a second sealing member placed in the second sealing groove, and the second sealing member may slidably contact the upper sub-plate to prevent the air from leaking through a gap between the upper plate and the upper sub-plate.

The upper plate may include an upper sliding plate provided on a contact surface between the upper plate and the segment.

The outer ring may include a side sliding plate provided on a contact surface between the outer ring and the segment.

The outer ring may include a lift bolt protruding to the outside of the outer ring.

The outer ring may include a guide key protruding toward the segment. The segment may include a sliding groove accommodating the guide key. The guide key may vertically slide in the sliding groove according to a vertical movement of the outer ring. The segment may move toward the tread when the guide key moves downward in the sliding groove. The segment may move away from the tread when the guide key moves upward in the sliding groove.

The guide key may include a stopper protruding toward the segment and accommodated in a guide groove formed in the sliding groove. The stopper may be slidable in the guide groove. The guide key may be restricted from moving upward when the stopper is caught by an upper end of the guide groove.

The outer ring may include a third sealing groove and a third sealing member placed in the third sealing groove. The third sealing member may slidably contact the lower plate to prevent the air from leaking through a gap between the outer ring and the lower plate.

The lower plate may include a lower sliding plate provided on a contact surface between the lower plate and the segment.

A lower side mold pressing a side surface of the green tyre may be provided on the lower plate. The lower plate may include a fourth sealing groove and a fourth sealing member placed in the fourth sealing groove. The fourth sealing member may prevent the air from leaking through a gap between the lower plate and the lower side mold.

The vacuum container for curing a tyre may further include a clamp provided on side surfaces of the outer ring and the lower plate and fixing the outer ring and the lower plate.

Additional aspects will be set forth in part in the description which follows and, in part, will be apparent from the description, or may be learned by practice of the present embodiments.

These and/or other aspects of the invention will become apparent and more readily appreciated from the following description of advantageous embodiments of the invention, taken in conjunction with the accompanying drawings in which:
FIG. 1 is a cross sectional view exemplarily illustrating an operation state of a vacuum container for curing a tyre according to an embodiment of the present invention;
FIG. 2 is a cross sectional view exemplarily illustrating another operation state of the vacuum container for curing a tyre of FIG. 1;
FIG. 3 is a perspective view illustrating a coupling relationship between an upper plate and an upper sub-plate of the vacuum container for curing a tyre of FIG. 1;
FIG. 4 is an enlarged perspective view of some elements of the upper plate of FIG. 3;
FIG. 5 is a perspective view illustrating an outer ring of the vacuum container for curing a tyre of FIG. 1;
FIG. 6 is a perspective view illustrating a lower plate of the vacuum container for curing a tyre of FIG. 1;
FIG. 7 is a cross-sectional view illustrating that a green tyre is loaded in a mold when the outer ring of the vacuum container for curing a tyre of FIG. 1 is moved to the top side;
FIG. 8 is a cross-sectional view illustrating that a mold closing process is initiated as the outer ring of the vacuum container for curing a tyre of FIG. 7 is lowered and a segment contacts a lower plate;
FIG. 9 is a cross-sectional view illustrating that a vacuum process is initiated as the outer ring of the vacuum container for curing a tyre of FIG. 8 is further lowered and the outer ring contacts the lower plate; and
FIG. 10 is a cross-sectional view illustrating that the vacuum process in the vacuum container for curing a tyre of FIG. 9 is completed.

Reference will now be made in detail to embodiments of the invention, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

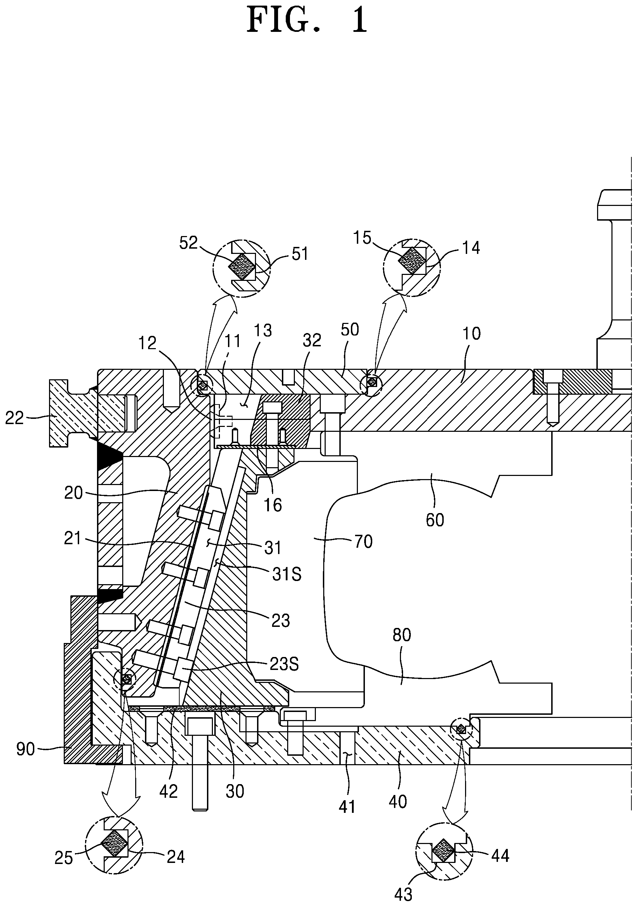

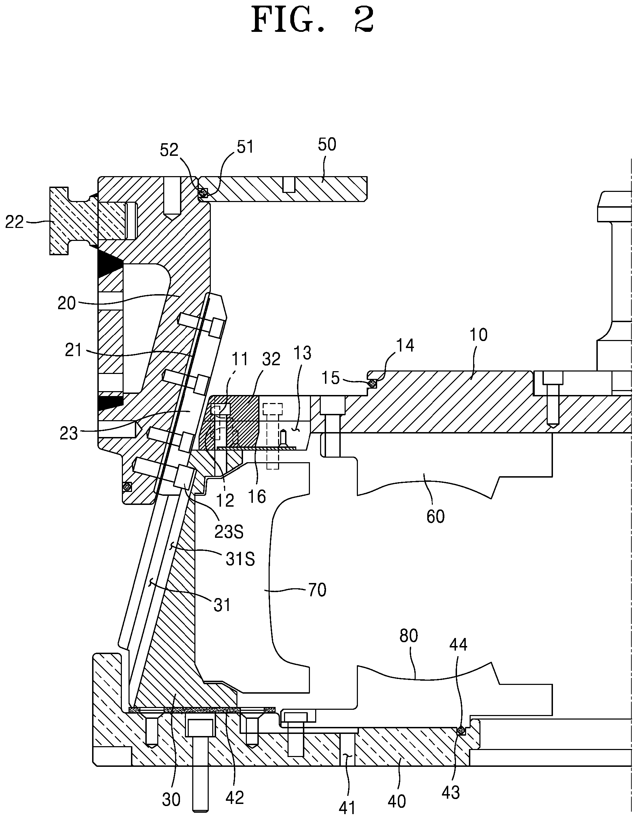

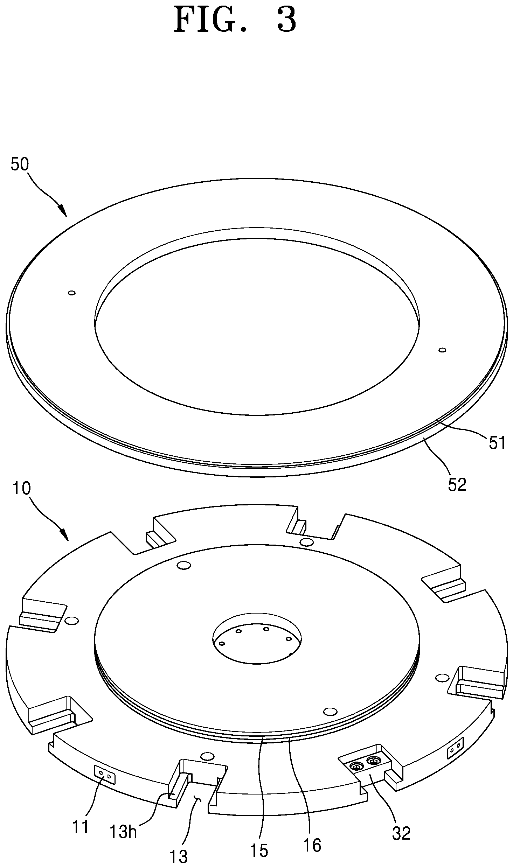

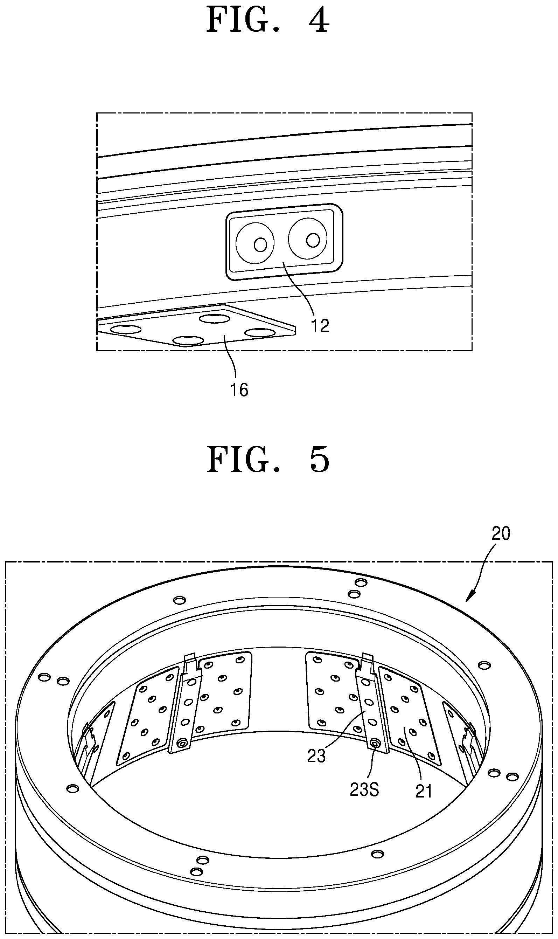

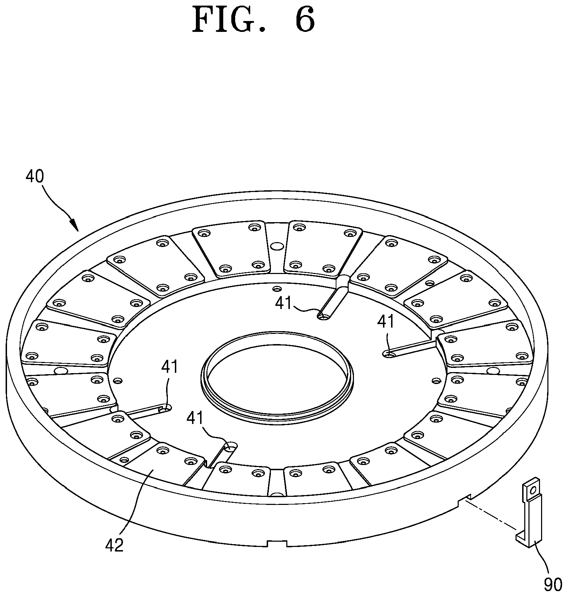

FIG. 1 is a cross-sectional view exemplarily illustrating an operation state of a vacuum container for curing a tyre according to an embodiment of the present invention. FIG. 2 is a cross-sectional view exemplarily illustrating another operation state of the vacuum container for curing a tyre of FIG. 1. FIG. 3 is a perspective view illustrating a coupling relationship between an upper plate and an upper sub-plate of the vacuum container for curing a tyre of FIG. 1. FIG. 4 is an enlarged perspective view of some elements of the upper plate of FIG. 3. FIG. 5 is a perspective view illustrating an outer ring of the vacuum container for curing a tyre of FIG. 1. FIG. 6 is a perspective view illustrating a lower plate of the vacuum container for curing a tyre of FIG. 1.

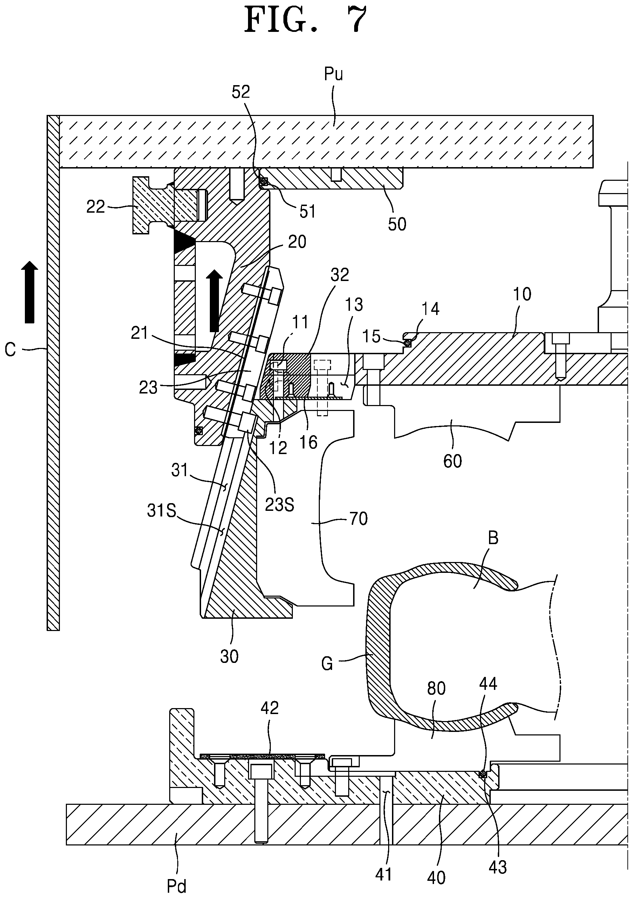

The vacuum container for curing a tyre (hereinafter, referred to as the "vacuum container") illustrated in FIGS. 1 and 2 may include an upper plate 10 pressing a side surface of a green tyre (see G of FIG. 7) and controlling entry and exit of air in an upward direction of the vacuum container, an outer ring 20 surrounding a side surface of the upper plate 10 and controlling entry and exit of air in the upward and lateral directions of the vacuum container according to the upward and downward movements with respect to the upper plate 10, a segment 30 slidably coupled to the outer ring 20, and moving toward the tread of the green tyre G when the outer ring 20 moves downward and moving away from the tread when the outer ring 20 moves upward, and a vacuum suction hole 41 discharging the air downward, and a lower plate 40 supporting the segment 30 to slide.

The upper plate 10 may fix the side surface of the green tyre G during curing, and may perform a function of controlling the entry and exit of air in the upward direction of the vacuum container. For example, as illustrated in FIG. 1, when the outer ring 20 contacts the lower plate 40 and the upper sub-plate 50 contacts the upper plate 10 as the outer ring 20 and an upper sub-plate 50 are lowered, the inside of the vacuum container is sealed, and thus the entry and exit of air in the upward direction of the upper plate 10 is prevented.

In contrast, as illustrated in FIG. 2, when the outer ring 20 and the upper sub-plate 50 are raised, air may move in and out of the vacuum container through an upper discharge hole 13 formed in the upper plate 10. The flow of air as above will be described in detail below with descriptions of other elements.

An upper side mold 60 is provided on the upper plate 10. The upper side mold 60 may be coupled to the upper plate 10 by using a coupling member (not shown) such as a bolt. The upper side mold 60 may contact an upper surface of the green tyre G with respect to a vertical direction in the drawing, and fix both side surfaces of the green tyre G with a lower side mold 80 that is described later.

Referring to FIGS. 3 and 4, the upper plate 10 may include an alignment recess 11 arranged at a position facing the outer ring 20, and a centering key 12 provided in the alignment recess 11. The centering key 12 may be coupled to the alignment recess 11 by using the coupling member such as a bolt.

Referring back to FIG. 1, the centering key 12 may slidably contact the outer ring 20 when the outer ring 20 moves downward. In detail, the centering key 12 may perform a function to maintain an interval between the upper plate 10 and the outer ring 20 substantially constant to prevent misalignment of positions of the upper plate 10 and the outer ring 20 by a repeated vertical movement of the outer ring 20 with respect to the upper plate 10.

The term "substantially" is an expression modifying "constant". The interval between the upper plate 10 and the outer ring 20 may not practically maintain a perfectly constant value. Fine allowance may be always formed between parts of any mechanical apparatus. Although the interval between the upper plate 10 and the outer ring 20 may vary due to fine allowance, such allowance does not affect a coupling structure of other elements of the vacuum container.

When the centering key 12 is not present, the center of the upper plate 10 is deviated to one side, and thus intervals between sealing members of the vacuum container, which are described later, are changed. Accordingly, a risk of the air in the container leaking to the outside increases. Furthermore, as an internal pressure of the vacuum container decreases, the quality of tyres manufactured through the vacuum container may deteriorate.

Accordingly, as the centering key 12 is provided on a contact surface between the upper plate 10 and the outer ring 20, the interval between the upper plate 10 and the outer ring 20 may be maintained substantially constant. Accordingly, during an operation of the vacuum container, the upper plate 10 may be kept centered in the outer ring 20, and thus the interval of each sealing member of the vacuum container may be maintained constant. Furthermore, as the internal pressure of the vacuum container is maintained constant, the quality of tyres manufactured through the vacuum container may be improved.

The outer ring 20 having a ring shape surrounding the side surface of the upper plate 10 is provided at the side of the upper plate 10. The outer ring 20 may vertically move with respect to the upper plate 10. The entry and exit of air through the upper and side surfaces of the vacuum container may be controlled by the movement of the segment 30 according to the vertical movement of the outer ring 20. In detail, When the outer ring 20 moves downward and contacts the upper plate 10 and the lower plate 40, the entry and exit of air through the upper and side surfaces of the vacuum container may be blocked.

The outer ring 20 may include a lift bolt 22 that protrudes outward from the outer ring 20. The lift bolt 22 is a structure for management of the vacuum container. When an operator replaces the upper side mold 60, a tread mold 70, and the lower side mold 80 in the vacuum container, or to disassemble the vacuum container to clean the inside of the vacuum container, the lift bolt 22 may be used as an assistant to carry the vacuum container by conveniently coupling a carrying device such as a belt to the lift bolt 22, without using a separate apparatus to carry the vacuum container.

The segment 30 is provided on an inner surface of the outer ring 20 and coupled thereto to be capable of vertically sliding with respect to the outer ring 20. The outer ring 20 may include a guide key 23 protruding toward the segment 30. The segment 30 may include a sliding groove 31 for accommodating the guide key 23. The guide key 23 may be coupled to the outer ring 20 by using the coupling member such as a bolt. The guide key 23 may vertically slide in the sliding groove 31 according to the vertical movement of the outer ring 20.

As illustrated in FIG. 1, when the guide key 23 moves downward in the sliding groove 31, the segment 30 may move toward the tread of the green tyre G. In contrast, as illustrated in FIG. 2, when the guide key 23 moves upward in the sliding groove 31, the segment 30 may move away from the tread of the green tyre G.

Referring to FIG. 5, the guide key 23 may include a stopper 23S protruding toward the segment 30 and accommodated in the sliding groove 31. The stopper 23S may slide in a guide groove 31S formed in the sliding groove 31. As illustrated in FIG. 2, when the stopper 23S is caught by a top end of the guide groove 31S, the guide key 23 may be prevented from moving upward.

Lower ends of the sliding groove 31 and the guide groove 31S are open at the lower side without a separate step or catching step. The guide key 23 is inserted from a lower side of the sliding groove 31 to be inserted in the sliding groove 31. As illustrated in FIG. 1, when the outer ring 20 moves downward and contacts the lower plate 40, the guide key 23 may be located at the lowermost end in the sliding groove 31.

Referring back to FIG. 3, the upper plate 10 may include the upper discharge hole 13 overlapping the segment 30 in a vertical direction. The upper discharge hole 13, which is provided above the segment 30, may allow or block an air flow in the upward direction of the vacuum container according to the movement of a guide block 32 that is slidably insertion-coupled to the upper discharge hole 13.

A protruding step 13h may be formed at opposite sides of the upper discharge hole 13 such that the guide block 32 may be insertion-coupled thereto. The guide block 32 that is insertion-coupled to the upper discharge hole 13 is fixed thereto by the protruding step 13h, so that the guide block 32 is prevented from slipping downward. Furthermore, as the guide block 32 is coupled to the segment 30 via the coupling member such as a bolt, the guide block 32 may move together with the movement of the segment 30.

In detail, when the outer ring 20 moves upward and then the segment 30 moves away from the green tyre G, the guide block 32 moves together away from the green tyre G. Accordingly, the air flow in the upward direction through the upper discharge hole 13 may be possible. When the outer ring 20 moves downward and then the segment 30 moves toward the green tyre G, the guide block 32 moves together toward the green tyre G, and thus the air flow through the upper discharge hole 13 may be blocked.

In other words, the segment 30 may reciprocate toward and away from the tread of the green tyre G by the vertical movement of the outer ring 20. As the guide block 32 opens or closes the upper discharge hole 13 formed in the upper plate 10 according to the reciprocation of the segment 30, the air flow in the upward direction of the vacuum container may be controlled.

The tread mold 70 is provided on an inner surface of the segment 30 by using the coupling member such as a bolt. Accordingly, when the segment 30 moves toward the tread of the green tyre G, the tread mold 70 may move together and press the tread of the green tyre G during curing. Furthermore, the tread mold 70 may move together when the segment 30 moves away from the green tyre G.

The lower plate 40 may function as a support plate for supporting all other elements of the vacuum container. In particular, the lower plate 40 may support the segment 30 to be capable of sliding toward and away from the tread of the green tyre G.

The lower side mold 80 is provided on the lower plate 40 and coupled thereto by using the coupling member such as a bolt. The lower side mold 80 contacts the lower surface of the green tyre G in the vertical direction in the drawing, and may fix both surfaces of the green tyre G with the upper side mold 60.

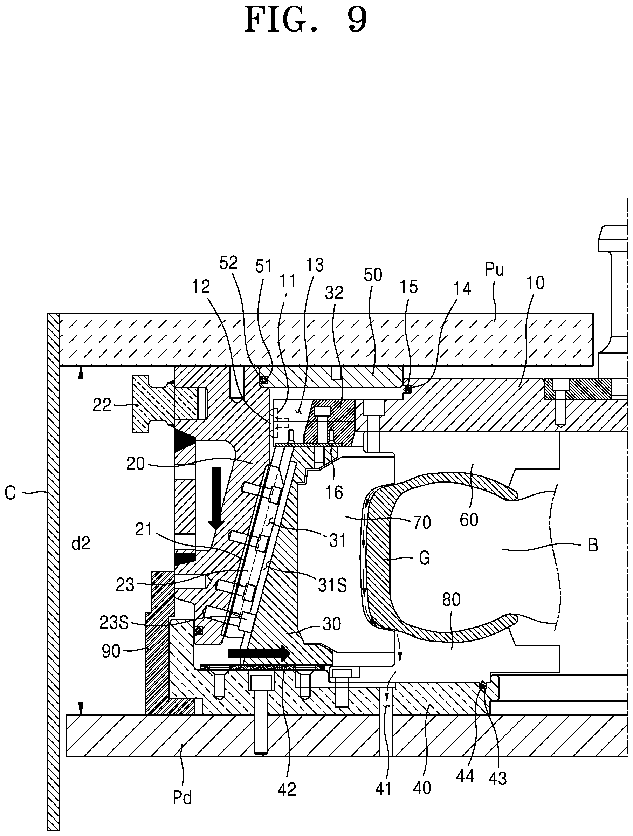

Referring to FIGS. 1 and 6, the lower plate 40 may include the vacuum suction hole 41 for discharging air downward. Although not illustrated, the vacuum suction hole 41 may be connected, via a vacuum pipe (not shown), to a vacuum pump (not shown) separately provided outside the vacuum container. The vacuum pump may discharge the air in the vacuum container to the outside by being operated in a vacuum mode of the vacuum container illustrated in FIG. 9, which will be described later.

However, in brief, as the outer ring 20 moves downward, the segment 30 moves in a direction to press the green tyre G. The tread mold 70 provided on the segment 30 contacts the upper side mold 60 and the lower side mold 80, thereby hermetically sealing the inside of the vacuum container. When the inside of the vacuum container is sealed as above, the air remaining in the vacuum container may be discharged to the outside of the vacuum container through the vacuum suction hole 41.

According to the above structure, while reciprocating in the directions toward and away from the green tyre G, the segment 30 slidably contacts the upper plate 10, the outer ring 20, and the lower plate 40.

An upper sliding plate 16 (see FIG. 4), a side sliding plate 21 (see FIG. 5), and a lower sliding plate 42 (see FIG. 6) are respectively provided between the segment 30 and the upper plate 10, between the segment 30 and the outer ring 20, and between the segment 30 and the lower plate 40, and thus frictional force that may be generated between the segment 30 and the upper plate 10, between the segment 30 and the outer ring 20, and between the segment 30 and the lower plate 40 may be alleviated.

The upper sliding plate 16, the side sliding plate 21, and the lower sliding plate 42 may be manufactured of self-lubrication metal including graphite. As such, since the upper sliding plate 16, the side sliding plate 21, and the lower sliding plate 42 are manufactured of metal having a relatively low frictional force, there is no need to inject a separate lubricant such as high-temperature grease between the segment 30 and the upper plate 10, between the segment 30 and the outer ring 20, and between the segment 30 and the lower plate 40.

When a lubricant is used to reduce friction of each element in the vacuum container, a remnant after use of the lubricant is accumulated in the vacuum container and thus continuous management such as periodical cleaning is needed. When cleaning is not properly performed, the life of the vacuum container may be shortened.

Accordingly, when the upper sliding plate 16, the side sliding plate 21, and the lower sliding plate 42 formed of self-lubrication metal instead of a lubricant is provided between the segment 30 and the upper plate 10, between the segment 30 and the outer ring 20, and between the segment 30 and the lower plate 40, even when the vacuum container is repeatedly and continuously used, a cycle of inside cleaning extends, and thus convenience may be improved. Also, the life of the vacuum container may be extended.

The upper sub-plate 50 may be provided between the upper plate 10 and the outer ring 20. As illustrated in FIG. 3, the upper sub-plate 50 is inserted around a portion protruding upward from the center of the upper plate 10, and may move, with the outer ring 20, up and down with respect to the upper plate 10.

Furthermore, although not illustrated in the drawing, the upper sub-plate 50 may be integrally formed with the outer ring 20. However, in the following description, a case in which the upper sub-plate 50 as a separate element from the outer ring 20 is provided between the upper plate 10 and the outer ring 20 is mainly discussed.

In the following description, a sealing structure for hermetically sealing the inside of the vacuum container during a curing process of the vacuum container is described in detail.

Referring to FIGS. 1 to 3, the outer ring 20 and the upper sub-plate 50 are configured to be capable of sliding in a vertical direction with respect to each other. Accordingly, the upper sub-plate 50 may include a first sealing groove 51 and a first sealing member 52 placed in the first sealing groove 51, as a structure to prevent the entry and exit of air between the outer ring 20 and the upper sub-plate 50.

In detail, the first sealing member 52 slidably contacts the outer ring 20 and may prevent the air from leaking through a gap between the outer ring 20 and the upper sub-plate 50. To this end, the first sealing member 52 is manufactured of an elastic material such as rubber and compressed to be placed in the first sealing groove 51. The first sealing member 52 may seal the gap between the outer ring 20 and the upper sub-plate 50 by being expanded between the outer ring 20 and the upper sub-plate 50.

Furthermore, according to the vertical movement of the outer ring 20, the upper sub-plate 50 may move up and down with respect to the upper plate 10. Accordingly, the upper plate 10 may include a second sealing groove 14 and a second sealing member 15 placed in the second sealing groove 14, as a structure to prevent the entry and exit of air through a gap between the upper plate 10 and the upper sub-plate 50.

In detail, the second sealing member 15 slidably contacts the upper sub-plate 50. When the outer ring 20 moves down and the upper sub-plate 50 contacts the upper plate 10, the entry and exit of air through the gap between the upper plate 10 and the upper sub-plate 50 may be prevented.

To this end, the second sealing member 15 is manufactured of an elastic material such as rubber and compressed to be placed in the second sealing groove 14. The second sealing member 15 may seal the gap between the upper plate 10 and the upper sub-plate 50 by being expanded between the upper plate 10 and the upper sub-plate 50.

Furthermore, while moving up and down, the outer ring 20 may slidably contact the lower plate 40. Accordingly, when the outer ring 20 moves down and contacts the lower plate 40, the entry and exit of air through the gap between the outer ring 20 and the lower plate 40 may be prevented. The outer ring 20 may include a third sealing groove 24 and a third sealing member 25 placed in the third sealing groove 24, as a structure to seal the inside of the vacuum container.

In detail, the third sealing member 25 slidably contacts the lower plate 40. When the outer ring 20 moves down and the outer ring 20 contacts the lower plate 40, the entry and exit of air through the gap between the outer ring 20 and the lower plate 40 may be prevented.

To this end, the third sealing member 25 is manufactured of an elastic material such as rubber and compressed to be placed in the third sealing groove 24. The third sealing member 25 may seal the gap between the outer ring 20 and the lower plate 40 by being expanded between the outer ring 20 and the lower plate 40.

Furthermore, the lower side mold 80 pressing the side surface of the green tyre G is provided on the lower plate 40. Accordingly, to prevent the entry and exit of air through a gap between the lower plate 40 and the lower side mold 80, the lower plate 40 may include a fourth sealing groove 43 and a fourth sealing member 44 placed in the fourth sealing groove 43.

In detail, the fourth sealing member 44 is manufactured of an elastic material such as rubber and compressed to be placed in the fourth sealing groove 43. The fourth sealing member 44 may seal the gap between the lower plate 40 and the lower side mold 80 by being expanded between the lower plate 40 and the lower side mold 80.

A clamp 90 for fixing both of the outer ring 20 and the lower plate 40 may be provided on side surfaces of the outer ring 20 and the lower plate 40, as a structure to assist management of the vacuum container with the lift bolt 22. The clamp 90 may be coupled to the outer ring 20 by using a bolt as illustrated in the drawings. However, the present disclosure is not limited thereto, and the clamp 90 may be coupled to the lower plate 40 by using a bolt. However, in the following description, a case in which the clamp 90 is provided on the side surface of the outer ring 20 as illustrated in the drawings is mainly discussed.

An operation state of the vacuum container according to an embodiment of the present disclosure is described in detail with reference to FIGS. 7 to 10.

FIG. 7 is a cross-sectional view illustrating that a green tyre is loaded in a mold when the outer ring of the vacuum container for curing a tyre of FIG. 1 is moved to the top side.

Referring to FIG. 7, the vacuum container according to an embodiment of the present disclosure may be supported by a lower platen Pd and covered by an upper platen Pu, and the side surface of the vacuum container may be surrounded by a cover C connected to the upper platen Pu. Although not illustrated in the drawings, the cover C may be connected to a driving unit (not shown) that provides a driving force to move the cover C up and down. According to the above structure, when the cover C moves up and down, the upper platen Pu coupled to the cover C, and the outer ring 20 and the upper sub-plate 50 coupled to the upper platen Pu, are moved up and down together.

FIG. 7 illustrates that the outer ring 20 is moved to the top side and the segment 30 is separated from the lower plate 40. In this state, the green tyre G is loaded in the vacuum container and inserted around a bladder B provided at the center of the inside of the vacuum container.

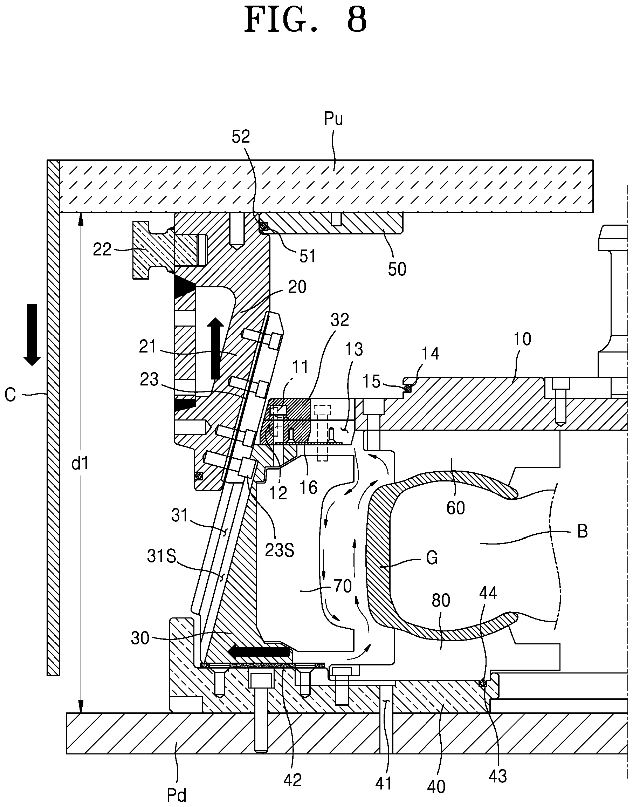

FIG. 8 is a cross-sectional view illustrating that a mold closing process is initiated as the outer ring 20 of the vacuum container for curing a tyre of FIG. 7 is lowered and the segment 30 contacts the lower plate 40.

FIG. 8 illustrates that the outer ring 20 and the segment 30 connected to the outer ring 20 are moved down together, and the segment 30 contacts the lower plate 40. In this state, the guide block 32 inserted in the upper discharge hole 13 is located at an outer side (left side in the drawing), and thus the air may be circulated in and out of the vacuum container.

In other words, when the outer ring 20 is lowered and the segment 30 contacts the lower plate 40, a gap between the upper side mold 60 and the tread mold 70, and a gap between the tread mold 70 and the lower side mold 80, are not yet closed, and thus the air may freely circulate in and out of the vacuum container through the gaps.

FIG. 9 is a cross-sectional view illustrating that a vacuum process is initiated as the outer ring 20 of the vacuum container for curing a tyre of FIG. 8 is further lowered and the outer ring 20 contacts the lower plate 40.

FIG. 9 illustrates that, after the segment 30 contacts the lower plate 40 according to the lowering of the outer ring 20, the outer ring 20 is further lowered and contacts the lower plate 40. In this state, the guide block 32 inserted in the upper discharge hole 13 is located at an inner side (right side in the drawing), and thus the air may be prevented from circulating in the upward direction of the vacuum container. Furthermore, since the gap between the outer ring 20 and the lower plate 40 is sealed by the third sealing member 25 (see FIG. 1), the air circulation to the side surface of the vacuum container may be prevented.

In addition, when the outer ring 20 contacts the lower plate 40, the gap between the upper side mold 60 and the tread mold 70, and the gap between the tread mold 70 and the lower side mold 80, are all closed, and thereafter the intrusion of air into the vacuum container may be prevented.

In this state, the vacuum pump connected to the vacuum suction hole 41 via the vacuum pipe operates, and thus the air remaining in the vacuum container, that is, the air remaining between the tread mold 70 and the green tyre G, is discharged to the outside through the vacuum suction hole 41, thereby making the inside of the vacuum container vacuum.

In other words, in the vacuum container according to an embodiment of the present disclosure, an air suction path for making the inside of the vacuum container vacuum may be formed only at the vacuum suction hole 41. When the air is discharged to the outside for vacuum at a position other than the vacuum suction hole 41, vents may be formed in a tyre tread surface due to air pressure. Since the vacuum suction hole 41 is formed at a position different from the position of the tread mold 70 contacting a tyre tread, no vent is formed in the tyre when the vacuum process is performed through the vacuum suction hole 41.

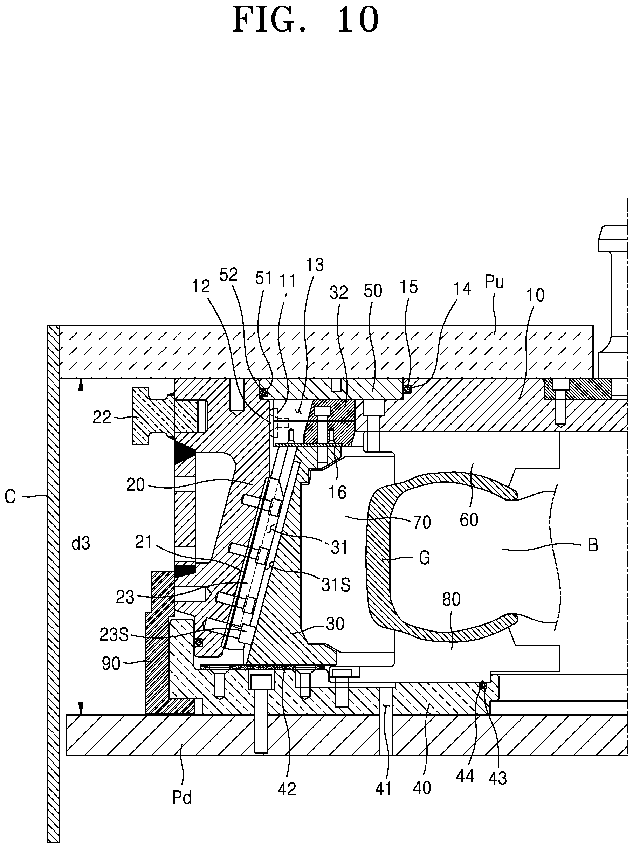

FIG. 10 is a cross-sectional view illustrating that the vacuum process in the vacuum container for curing a tyre of FIG. 9 is completed.

FIG. 10 illustrates that the inside of the vacuum container is completely made vacuum, and the air remaining between the tread mold 70 and the green tyre G is all discharged to the outside. Accordingly, the tread mold 70 of FIG. 10 may be in a more closely contact with the green tyre G compared with the tread mold 70 of FIG. 9. As such, when the tread mold 70 closely contacts the green tyre G as the inside of the vacuum container is vacuum, the outer ring 20 may be moved further toward the lower plate 40 compared to the outer ring 20 of FIG. 9. Furthermore, as the upper sub-plate 50 is further moved downward according to the lowering of the outer ring 20, the second sealing member 15 may seal the gap between the upper plate 10 and the upper sub-plate 50.

In other words, referring to FIGS. 8 to 10, assuming that a distance between the upper platen Pu and the lower platen Pd when the outer ring 20 is lowered and the segment 30 contacts the lower plate 40 is d1, a distance between the upper platen Pu and the lower platen Pd when the outer ring 20 contacts the lower plate 40 and a vacuum mode of the vacuum container is initiated is d2, and a distance between the upper platen Pu and the lower platen Pd when the inside of the vacuum container is completely vacuum is d3, a relationship that d1 > d2 > d3 may be established.

As described above, according to the vacuum container for curing a tyre according to the above-described embodiment of the present disclosure, the inside of the vacuum container may be effectively sealed from the outside.

Furthermore, according to the above-described embodiment, the air remaining in the vacuum container may be discharged to the outside through a simple structure to prevent formation of vents in the tyre tread.

Furthermore, according to the above-described embodiment, management of the vacuum container is made easy, and thus the life of the vacuum container may extend.

It should be understood that embodiments described herein should be considered in a descriptive sense only and not for purposes of limitation. Descriptions of features or aspects within each embodiment should typically be considered as available for other similar features or aspects in other embodiments.

While one or more embodiments have been described with reference to the figures, it will be understood by those of ordinary skill in the art that various changes in form and details may be made therein without departing from the spirit and scope as defined by the following claims.

## Claims

1. A vacuum container for curing a tyre, comprising:
an upper plate (10) fixing a side surface of a green tyre and controlling entry and exit of air in an upward direction of the vacuum container;
an outer ring (20) surrounding a side surface of the upper plate and controlling entry and exit of the air in the upward and lateral directions of the vacuum container according to a vertical movement of the outer ring with respect to the upper plate;
a segment (30) slidably coupled to the outer ring, moving toward a tread of the green tyre when the outer ring moves downward, and moving away from the tread of the green tyre when the outer ring moves upward; and
a lower plate (40) having a vacuum suction hole (41) for discharging the air downward and slidably supporting the segment,
wherein, when the outer ring moves downward and the outer ring contacts the upper plate and the lower plate, the entry and exit of the air in the upward and lateral directions of the vacuum container are blocked, and
wherein an air suction path is formed only at the vacuum suction hole (41) formed at a position different from a position of a tread mold (70) contacting a tyre tread, and/or wherein the upper plate comprises an upper discharge hole (13) formed overlapping the segment in a vertical direction and the segment comprises a guide block (32) that is slidably insertion-coupled to the upper discharge hole and moves together when the outer ring (20) moves upward and the segment (30) moves away from the tread, thereby allowing an air flow in the upward direction through the upper discharge hole, and moves together when the outer ring moves downward and the segment moves toward the tread, thereby blocking the air flow through the upper discharge hole.

2. The vacuum container for curing a tyre according to claim 1, wherein the upper plate comprises:
an alignment recess (11) formed at a position facing the outer ring; and
a centering key (12) provided in the alignment recess,
wherein, when the outer ring moves downward, the centering key slidably contacts the outer ring, and an interval between the upper plate and the outer ring is maintained substantially constant such that positions of the upper plate and the outer ring are not misaligned by a repeated vertical movement of the outer ring with respect to the upper plate.

3. The vacuum container for curing a tyre according to claim 1 or 2, wherein the upper discharge hole comprises a protruding step (13h) formed at either side in an edge direction of the upper discharge hole such that the guide block is insertion-coupled to the upper discharge hole.

4. The vacuum container for curing a tyre according to any one of claims 1 to 3, further comprising an upper sub-plate (50) provided between the upper plate and the outer ring.

5. The vacuum container for curing a tyre according to claim 4, wherein
the outer ring and the upper sub-plate are slidable in the vertical direction with respect to each other,
the upper sub-plate comprises a first sealing groove (51) and a first sealing member (52) placed in the first sealing groove, and
the first sealing member slidably contacts the outer ring to prevent the air from leaking through a gap between the outer ring and the upper sub-plate.

6. The vacuum container for curing a tyre according to claim 4 or 5, wherein
the upper plate comprises a second sealing groove (14) and a second sealing member (15) placed in the second sealing groove, and
the second sealing member slidably contacts the upper sub-plate to prevent the air from leaking through a gap between the upper plate and the upper sub-plate.

7. The vacuum container for curing a tyre according to any one of claims 1 to 6, wherein the upper plate comprises an upper sliding plate (16) provided on a contact surface between the upper plate and the segment.

8. The vacuum container for curing a tyre according to any one of claims 1 to 7, wherein the outer ring comprises a side sliding plate (21) provided on a contact surface between the outer ring and the segment.

9. The vacuum container for curing a tyre according to any one of claims 1 to 8, wherein the outer ring comprises a lift bolt (22) protruding to the outside of the outer ring.

10. The vacuum container for curing a tyre according to any one of claims 1 to 9, wherein
the outer ring comprises a guide key (23) protruding toward the segment,
the segment comprises a sliding groove (31) accommodating the guide key,
the guide key vertically slides in the sliding groove according to a vertical movement of the outer ring,
the segment moves toward the tread when the guide key moves downward in the sliding groove, and
the segment moves away from the tread when the guide key moves upward in the sliding groove.

11. The vacuum container for curing a tyre according to claim 10, wherein
the guide key comprises a stopper (23S) protruding toward the segment and accommodated in a guide groove (31S) formed in the sliding groove,
the stopper is slidable in the guide groove, and
the guide key is restricted from moving upward when the stopper is caught by an upper end of the guide groove.

12. The vacuum container for curing a tyre according to any one of claims 1 to 11, wherein
the outer ring comprises a third sealing groove and a third sealing member placed in the third sealing groove (24), and
the third sealing member (25) slidably contacts the lower plate to prevent the air from leaking through a gap between the outer ring and the lower plate.

13. The vacuum container for curing a tyre according to any one of claims 1 to 12, wherein
the lower plate comprises a lower sliding plate provided on a contact surface between the lower plate and the segment, and/or
a clamp (90) is provided on side surfaces of the outer ring and the lower plate, which clamp fixes the outer ring and the lower plate.

14. The vacuum container for curing a tyre according to any one of claims 1 to 13, wherein
a lower side mold (80) pressing a side surface of the green tyre is provided on the lower plate,
the lower plate comprises a fourth sealing groove (43) and a fourth sealing member (44) placed in the fourth sealing groove, and
the fourth sealing member prevents the air from leaking through a gap between the lower plate and the lower side mold.

## Patentansprüche

1. Vakuumbehälter zum Vulkanisieren eines Reifens, umfassend:
eine obere Platte (10) zum Fixieren einer Seitenfläche eines Reifenrohlings und Steuern von Lufteintritt und Luftaustritt nach oben beim Vakuumbehälter;
einen äußeren Ring (20), der eine Seitenfläche der oberen Platte umgibt und Lufteintritt und Luftaustritt nach oben und seitlich beim Vakuumbehälter abhängig von einer vertikalen Bewegung des äußeren Rings relativ zur oberen Platte steuert;
ein Segment (30), das verschiebbar mit dem äußeren Ring gekoppelt ist und sich zu einer Lauffläche des Reifenrohlings bewegt, wenn sich der äußere Ring nach unten bewegt, und sich von der Lauffläche des Reifenrohlings weg bewegt, wenn sich der äußere Ring nach oben bewegt, und
eine untere Platte (40) mit einer Vakuumansaugöffnung (41) zum Ablassen der Luft nach unten und verschiebbaren Abstützen des Segments,
wobei, wenn sich der äußere Ring nach unten bewegt und der äußere Ring mit der oberen Platte und der unteren Platte in Kontakt kommt, der Lufteintritt und Luftaustritt nach oben und seitlich beim Vakuumbehälter blockiert sind und
wobei ein Luftansaugweg nur an der Vakuumansaugöffnung (41) gebildet ist, die an einer anderen Position als einer Position einer Laufflächenform (70) in Kontakt mit einer Reifenlauffläche ausgebildet ist, und/oder wobei die obere Platte eine obere Auslassöffnung (13) umfasst, die das Segment in vertikaler Richtung überlappend gebildet ist, und das Segment einen Führungsblock (32) umfasst, der sich mit der oberen Auslassöffnung verschiebbar in Einsatzkopplung befindet und sich gemeinsam bewegt, wenn der äußere Ring (20) sich nach oben bewegt und das Segment (30) sich von der Lauffläche weg bewegt, wodurch ein Luftstrom nach oben durch die obere Auslassöffnung hindurch ermöglicht ist, und sich gemeinsam bewegt, wenn der äußere Ring sich nach unten bewegt und das Segment sich zur Lauffläche hin bewegt, wodurch der Luftstrom durch die obere Auslassöffnung hindurch blockiert ist.

2. Vakuumbehälter zum Vulkanisieren eines Reifens nach Anspruch 1, wobei die obere Platte umfasst:
eine Ausricht-Vertiefung (11), die an einer dem äußeren Ring zugewandten Position ausgebildet ist, und
einen Zentrierschlüssel (12), der in der Ausricht-Vertiefung vorgesehen ist,
wobei, wenn der äußere Ring sich nach unten bewegt, der Zentrierschlüssel verschiebbar mit dem äußeren Ring in Kontakt ist und ein Abstand zwischen der oberen Platte und dem äußeren Ring im Wesentlichen konstant gehalten wird, so dass Positionen der oberen Platte und des äußeren Rings durch wiederholte Vertikalverschiebung des äußeren Rings relativ zur oberen Platte nicht fehljustiert werden.

3. Vakuumbehälter zum Vulkanisieren eines Reifens nach Anspruch 1 oder 2, wobei die obere Auslassöffnung eine hervorstehende Stufe (13h) umfasst, die auf jeder Seite in Kantenrichtung der oberen Auslassöffnung derart ausgebildet ist, dass der Führungsblock sich mit der oberen Auslassöffnung in Einsatzkopplung befindet.

4. Vakuumbehälter zum Vulkanisieren eines Reifens nach einem der Ansprüche 1 bis 3, weiter umfassend eine obere Hilfsplatte (50), die zwischen der oberen Platte und dem äußeren Ring vorgesehen ist.

5. Vakuumbehälter zum Vulkanisieren eines Reifens nach Anspruch 4, wobei
der äußere Ring und die obere Hilfsplatte in vertikaler Richtung relativ zueinander verschiebbar ausgebildet sind,
die obere Hilfsplatte eine erste Dichtungsnut (51) und ein erstes Dichtungsglied (52), das in die erste Dichtungsnut eingebracht ist, umfasst und
das erste Dichtungsglied verschiebbar mit dem äußeren Ring in Kontakt ist, um zu verhindern, dass die Luft durch einen Spalt zwischen dem äußeren Ring und der oberen Hilfsplatte entweicht.

6. Vakuumbehälter zum Vulkanisieren eines Reifens nach Anspruch 4 oder 5, wobei
die obere Platte eine zweite Dichtungsnut (14) und ein zweites Dichtungsglied (15), das in die zweite Dichtungsnut eingebracht ist, umfasst und
das zweite Dichtungsglied verschiebbar mit der oberen Hilfsplatte in Kontakt ist, um zu verhindern, dass die Luft durch einen Spalt zwischen der oberen Platte und der oberen Hilfsplatte entweicht.

7. Vakuumbehälter zum Vulkanisieren eines Reifens nach einem der Ansprüche 1 bis 6, wobei die obere Platte eine obere Gleitplatte (16) umfasst, die auf einer Kontaktfläche zwischen der oberen Platte und dem Segment vorgesehen ist.

8. Vakuumbehälter zum Vulkanisieren eines Reifens nach einem der Ansprüche 1 bis 7, wobei der äußere Ring eine seitliche Gleitplatte (21) umfasst, die auf einer Kontaktfläche zwischen dem äußeren Ring und dem Segment vorgesehen ist.

9. Vakuumbehälter zum Vulkanisieren eines Reifens nach einem der Ansprüche 1 bis 8, wobei der äußere Ring einen Hebebolzen (22) umfasst, der zur Außenseite des äußeren Rings hin abragt.

10. Vakuumbehälter zum Vulkanisieren eines Reifens nach einem der Ansprüche 1 bis 9, wobei
der äußere Ring einen Führungsschlüssel (23) umfasst, der zum Segment hin abragt,
das Segment eine Schiebenut (31) umfasst, die den Führungsschlüssel aufnimmt,
der Führungsschlüssel sich abhängig von einer vertikalen Bewegung des äußeren Rings in der Schiebenut vertikal verschiebt,
das Segment sich zur Lauffläche hin bewegt, wenn der Führungsschlüssel sich nach unten in der Schiebenut bewegt, und
das Segment sich von der Lauffläche weg bewegt, wenn der Führungsschlüssel sich nach oben in der Schiebenut bewegt.

11. Vakuumbehälter zum Vulkanisieren eines Reifens nach Anspruch 10, wobei
der Führungsschlüssel einen Stopper (23S) umfasst, der zum Segment hin abragt und in einer in der Schiebenut ausgebildeten Führungsnut (31S) aufgenommen ist,
der Stopper in der Führungsnut verschiebbar ist und
der Führungsschlüssel in seiner Bewegung nach oben gehindert ist, wenn der Stopper von einem oberen Ende der Führungsnut gefangen ist.

12. Vakuumbehälter zum Vulkanisieren eines Reifens nach einem der Ansprüche 1 bis 11, wobei
der äußere Ring eine dritte Dichtungsnut und ein drittes Dichtungsglied, das in die dritte Dichtungsnut (24) eingebracht ist, umfasst und
das dritte Dichtungsglied (25) verschiebbar mit der unteren Platte in Kontakt ist, um zu verhindern, dass Luft durch einen Spalt zwischen dem äußeren Ring und der unteren Platte entweicht.

13. Vakuumbehälter zum Vulkanisieren eines Reifens nach einem der Ansprüche 1 bis 12, wobei
die untere Platte eine untere Gleitplatte umfasst, die auf einer Kontaktfläche zwischen der unteren Platte und dem Segment vorgesehen ist, und/oder
eine Klemme (90) auf Seitenflächen des äußeren Rings und der unteren Platte vorgesehen ist, wobei die Klemme den äußeren Ring und die untere Platte fixiert.

14. Vakuumbehälter zum Vulkanisieren eines Reifens nach einem der Ansprüche 1 bis 13, wobei
eine Unterseitenform (80) zum Pressen einer Seitenfläche des Reifenrohlings auf der unteren Platte vorgesehen ist,
die untere Platte eine vierte Dichtungsnut (43) und ein viertes Dichtungsglied (44), das in die vierte Dichtungsnut eingebracht ist, umfasst und
das vierte Dichtungsglied verhindert, dass die Luft durch einen Spalt zwischen der unteren Platte und der Unterseitenform entweicht.

## Revendications

1. Réservoir à vide pour le durcissement de pneus, comprenant :
une plaque supérieure (10) fixant une surface latérale d'un pneu cru et contrôlant entrée et sortie d'air dans une direction vers le haut du réservoir à vide ;
un anneau extérieur (20) entourant une surface latérale de la plaque supérieure et contrôlant entrée et sortie de l'air dans la direction vers le haut et la direction latérale du réservoir à vide selon un mouvement vertical de l'anneau extérieur par rapport à la plaque supérieure ;
un segment (30) couplé de manière coulissante à l'anneau extérieur, se déplaçant vers une bande de roulement du pneu cru lorsque l'anneau extérieur se déplace vers le bas, et s'éloignant de la bande de roulement du pneu cru lorsque l'anneau extérieur se déplace vers le haut ; et
une plaque inférieure (40) présentant un trou d'aspiration sous vide (41) pour déchargement d'air vers le bas et supportant le segment en coulissant,
dans lequel, lorsque l'anneau extérieur se déplace vers le bas et l'anneau extérieur entre en contact avec la plaque supérieure et la plaque inférieure, l'entrée et la sortie de l'air dans la direction vers le haut et la direction latérale du réservoir à vide sont bloquées, et
dans lequel un trajet d'aspiration d'air n'est formé que sur le trou d'aspiration sous vide (41) formé à une position différente d'une position d'un moule de bande de roulement (70) contactant une bande de roulement de pneu et/ou dans lequel la plaque supérieure comporte un trou de décharge supérieur (13) formé en chevauchant le segment dans une direction verticale et le segment comporte un bloc de guidage (32) qui est accouplé par insertion en coulissant au trou de décharge supérieur et se déplace ensemble lorsque l'anneau extérieur (20) se déplace vers le haut et le segment (30) s'éloigne de la bande de roulement, ce qui permet un flux d'air dans la direction vers le haut à travers le trou de décharge supérieur, et se déplace ensemble lorsque l'anneau extérieur se déplace vers le bas et le segment se déplace vers la bande de roulement, ce qui bloque le flux d'air à travers le trou de décharge supérieur.

2. Réservoir à vide pour le durcissement de pneus selon la revendication 1, dans lequel la plaque supérieure comprend :
un évidement d'alignement (11) formé à une position faisant face à l'anneau extérieur ;
et
une clé de centrage (12) agencée dans l'évidement d'alignement,
dans lequel, lorsque l'anneau extérieur se déplace vers le bas, la clé de centrage contacte en coulissant l'anneau extérieur, et un intervalle entre la plaque supérieure et l'anneau extérieur est maintenu essentiellement constant de telle manière que positions de la plaque supérieure et l'anneau extérieur ne sont pas rendues désalignées à cause de mouvement vertical répété de l'anneau extérieur par rapport à la plaque supérieure.

3. Réservoir à vide pour le durcissement de pneus selon la revendication 1 ou 2, dans lequel le trou de décharge supérieur comporte un cran saillant (13h) formé sur chaque côté dans une direction de bord du trou de décharge supérieur de telle manière que le bloc de guidage est accouplé par insertion au trou de décharge supérieur.

4. Réservoir à vide pour le durcissement de pneus selon l'une quelconque des revendications 1 à 3, en outre comprenant une sous-plaque supérieure (50) agencée entre la plaque supérieure et l'anneau extérieur.

5. Réservoir à vide pour le durcissement de pneus selon la revendication 4, dans lequel
l'anneau extérieur et la sous-plaque supérieure peuvent coulisser dans la direction verticale l'un par rapport à l'autre,
la sous-plaque supérieure comprend une première rainure d'étanchéité (51) et un premier élément d'étanchéité (52) placé dans la première rainure d'étanchéité, et
le premier élément d'étanchéité contacte en coulissant l'anneau extérieur afin d'empêcher des fuites d'air à travers une fente entre l'anneau extérieur et la sous-plaque supérieure.

6. Réservoir à vide pour le durcissement de pneus selon la revendication 4 ou 5, dans
lequel la plaque supérieure comporte une deuxième rainure d'étanchéité (14) et un deuxième élément d'étanchéité (15) placé dans la deuxième rainure d'étanchéité, et
le deuxième élément d'étanchéité contacte en coulissant la sous-plaque supérieure afin d'empêcher des fuites d'air à travers une fente entre la plaque supérieure et la sous-plaque supérieure.

7. Réservoir à vide pour le durcissement de pneus selon l'une quelconque des revendications 1 à 6, dans lequel la plaque supérieure comporte une plaque coulissante supérieure (16) agencée sur une surface de contact entre la plaque supérieure et le segment.

8. Réservoir à vide pour le durcissement de pneus selon l'une quelconque des revendications 1 à 7, dans lequel l'anneau extérieur comporte une plaque coulissante latérale (21) agencée sur une surface de contact entre l'anneau extérieur et le segment.

9. Réservoir à vide pour le durcissement de pneus selon l'une quelconque des revendications 1 à 8, dans lequel l'anneau extérieur comporte un boulon de levage (22) faisant saillie vers l'extérieur de l'anneau extérieur.

10. Réservoir à vide pour le durcissement de pneus selon l'une quelconque des revendications 1 à 9, dans lequel
l'anneau extérieur comporte une clé de guidage (23) faisant saillie vers le segment,
le segment comporte une rainure de glissement (31) logeant la clé de guidage,
la clé de guidage glisse verticalement dans la rainure de glissement selon un mouvement vertical de l'anneau extérieur,
le segment se déplace vers la bande de roulement lorsque la clé de guidage se déplace vers le bas dans la rainure de glissement, et
le segment s'éloigne de la bande de roulement lorsque la clé de guidage se déplace vers le haut dans la rainure de glissement.

11. Réservoir à vide pour le durcissement de pneus selon la revendication 10, dans lequel la clé de guidage comporte un arrêt (23S) faisant saillie vers le segment et logé dans une rainure de guidage (31S) formée dans la rainure de glissement,
l'arrêt pouvant glisser dans la rainure de guidage, et
la clé de guidage est empêchée de se déplacer vers le haut lorsque l'arrêt est retenu par une extrémité supérieure de la rainure de guidage.

12. Réservoir à vide pour le durcissement de pneus selon l'une quelconque des revendications 1 à 11, dans lequel
l'anneau extérieur comporte une troisième rainure d'étanchéité et un troisième élément d'étanchéité placé dans la troisième rainure d'étanchéité (24), et
le troisième élément d'étanchéité (25) contacte en coulissant la plaque inférieure afin d'empêcher des fuites d'air à travers une fente entre l'anneau extérieur et la plaque inférieure.

13. Réservoir à vide pour le durcissement de pneus selon l'une quelconque des revendications 1 à 12, dans lequel
la plaque inférieure comporte une plaque coulissante inférieure agencée sur une surface de contact entre la plaque inférieure et le segment, et/ou
une attache (90) est agencée sur surfaces latérales de l'anneau extérieur et la plaque inférieure, ladite attache fixant l'anneau extérieur et la plaque inférieure.

14. Réservoir à vide pour le durcissement de pneus selon l'une quelconque des revendications 1 à 13, dans lequel
un moule côté inférieur (80) pressant une surface latérale du pneu cru est agencé sur la plaque inférieure,
la plaque inférieure comporte une quatrième rainure d'étanchéité (43) et un quatrième élément d'étanchéité (44) placé dans la quatrième rainure d'étanchéité, et
le quatrième élément d'étanchéité empêche des fuites d'air à travers une fente entre la plaque inférieure et le moule côté inférieur.
